# EUROPÄISCHE PATENTSCHRIFT

(11) **EP 2 700 076 B1**
(45) Veröffentlichungstag und Bekanntmachung des Hinweises auf die Patenterteilung: **24.02.2016**
(21) Anmeldenummer: 13711579.6
(22) Anmeldetag: 27.02.2013
(51) Int. Cl.: G21C 15/28, F01D 25/00, G21C 17/022, G21D 1/00, B08B 9/032, C23F 11/14, F22B 37/48, F22B 37/56

(54) **VERFAHREN ZUR REINIGUNG UND KONDITIONIERUNG DES WASSER-DAMPFKREISLAUFES EINES KRAFTWERKES, INSBESONDERE EINES KERNKRAFTWERKES**
METHOD FOR PURIFYING AND CONDITIONING THE WATER-STEAM CIRCUIT OF A POWER PLANT, ESPECIALLY OF A NUCLEAR POWER PLANT
PROCÉDÉ DE NETTOYAGE ET DE CONDITIONNEMENT D'UN CIRCUIT DE VAPEUR D'EAU D'UNE CENTRALE, EN PARTICULIER D'UNE CENTRALE NUCLÉAIRE

(30) Priorität: 28.02.2012 DE 102012203010
(43) Veröffentlichungstag der Anmeldung: 26.02.2014
(73) Patentinhaber: AREVA GmbH, 91052 Erlangen (DE)
(72) Erfinder: RAMMINGER, Ute, 91154 Roth (DE); FANDRICH, Jörg, 90587 Obermichelbach (DE); ROUMIGUIÉRE, Fernando-Mario, 91058 Erlangen (DE)
(74) Vertreter: Meissner, Bolte & Partner GbR
(86) Internationale Anmeldenummer: PCT/EP2013/053919
(87) Internationale Veröffentlichungsnummer: WO 2013/127842

(56) Entgegenhaltungen:
- EP-A1- 0 902 232
- DD-A1- 107 962
- JP-A- 2011 033 301
- US-A- 4 999 161

## Beschreibung

Die Erfindung betrifft ein Verfahren zur Reinigung und Konditionierung des Wasser-Dampfkreislaufes eines Kraftwerkes, insbesondere eines Kernkraftwerkes. Unter dem Begriff "Konditionierung" ist hier eine Maßnahme zu verstehen, mit der die Oberflächen der Komponenten des Wasser-Dampfkreislaufes vor Korrosion geschützt werden. Wenn von Oberflächen gesprochen ist, so sind damit zum Einen die inneren Oberflächen beispielsweise von Leitungen, Wärmetauschern und Behältern und zum Anderen von dem Arbeitsmedium (Wasser, Dampf) des Kreislaufes umströmte Oberflächen von Bauteilen wie etwa Turbinenschaufeln gemeint. Beispielsweise aus der DE-Offenlegungsschrift 2625607 und dem DD-Patent 107962 sind Verfahren bekannt, bei denen in den Sekundärkreislauf von Druckwasserreaktoren während des Leistungsbetriebes filmbildende Amine (FFA = film forming amines) dosiert werden.

Aus der Offenlegungsschrift EP 0 902 232 A1 ist weiterhin ein Verfahren zum Zumischen von filmbildenden Aminen in Abhängigkeit von der Konzentration von Verunreinigungen in einem Wasser-Dampf-Kreislauf bekannt.

Ziel einer Konditionierung der in Rede stehenden Art ist es, einen möglichst durchgängigen dünnen, maximal ein bis zwei Molekülschichten dicken Film auf den Oberflächen zu erzeugen. Dabei besteht bei den herkömmlichen Verfahren jedoch die Gefahr, dass sich dickere FFA-Ablagerungen bilden, welche einerseits den Betriebsablauf stören, indem sie beispielsweise den Wärmetransport in Dampferzeugern oder anderen Wärmetauschern verringern oder Strömungsquerschnitte verengen. Außerdem besteht die Gefahr, dass sich Teile der Ablagerungen lösen und Turbinenschaufeln beschädigen oder mechanische Filteranlagen und Ionentauscher zusetzen, so dass diese ausgetauscht werden müssen.

Ein weiteres bei der Erzeugung eines Films auftretendes Problem ist, dass bei der Dosierung des Filmbildners an den Bauteiloberflächen vorhandene bzw. dort anhaftende Verunreinigungen freigesetzt werden und ins Arbeitsmittel übertreten. Dieser Effekt beruht auf zweierlei Ursachen. Zum Einen lagern sich Moleküle des Filmbildners, die aufgrund ihres chemischen Aufbaus wie ein Tensid wirken, an Partikel von Korrosionsprodukten wie Magnetit an, wodurch die Partikel von der Oberfläche abgelöst und im Arbeitsmedium kolloidal in der Schwebe gehalten werden. Zum Anderen werden bei der Adsorption der filmbildenden Amine an den Oberflächen der Bauteile dort adsorbierte ionale Verunreinigungen, beispielsweise Kationen wie Natrium-, Kalium-, Magnesium-, und Calciumionen, und Anionen wie etwa Chlorid- Florid-, Sulfat-, Sulfit-, Carbonat-, und Silikationen von der Oberfläche verdrängt und gelangen dadurch in Lösung.

Der in Rede stehende Effekt des Filmbildners ist unerwünscht, weil Verunreinigungen, die bisher in einem begrenzten Bereich des Wasser-Dampf-Kreislauf immobilisiert waren, über das gesamte System verteilt werden. Weiterhin besteht die Gefahr, dass vorgegebene Grenzwerte für Verunreinigungen überschritten werden, so dass entsprechende Gegenmaßnahmen zu ergreifen sind. Im Kernkraftwerksbereich muss beispielsweise bei einer Natriumkonzentration von mehr als 0,1 mg/kg oder einer Leitfähigkeit (hinter Kationentauscher) von mehr als 2 µS/cm im Dampferzeugerwasser ein zeitlich beschränkter Betrieb mit einer Leistungsreduzierung auf 30% und bei über 0,5 mg/kg bzw. 7 µS/cm ein Abfahren der Anlage erfolgen.

Bei herkömmlichen Verfahren wurden die oben genannte Probleme außer Acht gelassen oder es wurde, um die Probleme zu vermeiden, mit sehr niedrigen FFA-Konzentrationen gearbeitet, was aber mit extrem langen Verfahrensdauern und entsprechenden Kosten verbunden war.

Aufgabe der Erfindung ist es, ein Verfahren vorzuschlagen, mit dem die geschilderten Nachteile vermieden werden.

Diese Aufgabe wird bei einem Verfahren der eingangs genannten Art dadurch gelöst, dass während des Leistungsbetriebes dem im Wasser-Dampfkreislauf zirkulierenden Arbeitsmedium ein Amin zudosiert wird, welches als Filmbildner wirkt und auf den Oberflächen des Kreislaufes einen hydrophoben Film bildet. Das Verfahren wird dabei so durchgeführt, dass praktisch zu jedem Verfahrenszeitpunkt eine Kontrolle sowohl über die Konzentration des Filmbildners bzw. den Fortgang der Filmbildung als auch über die Auswirkungen der Filmbildner-Dosierung hinsichtlich dadurch mobilisierter Verunreinigungen gegeben ist. Dies wird dadurch erreicht, dass während der Dauer des Verfahrens die Konzentration von wenigstens einer Verunreinigung sowie die Konzentration des Filmbildners gemessen wird und zwar zumindest im Dampferzeuger-Speisewasser, wobei die Konzentration des Filmbildners in Abhängigkeit von der Konzentration wenigstens einer Verunreinigung verändert wird. Auf diese Weise ist gewährleistet, dass zu jedem Verfahrenszeitpunkt vorgegebene Richt- und Grenzwerte einer Verunreinigung, insbesondere einer korrosiv wirkenden ionalen Verunreinigung wie etwa Chlorid- oder Natriumionen, eingehalten bzw. nicht überschritten werden. Außerdem kann wirksam verhindert werden, dass eine an einem lokal begrenzten Oberflächenbereich des Wasser-Dampf-Kreislaufs immobilisierte Verunreinigung durch die Dosierung des Filmbildners rasch mobilisiert und in großer Menge im gesamten Kreislauf verteilt wird.

Als Gegenmaßnahme auf einen Anstieg der Konzentration einer Verunreinigung wird die Dosierrate des Filmbildners insbesondere mit Blick auf die Einhaltung von Grenzwerten verringert oder unterbrochen.

Eine weitere Gegenmaßnahme besteht darin, die Konzentration von in das Arbeitsmedium übergetretenen Verunreinigungen zu verringern. Dies geschieht vorzugsweise dadurch, dass der Wasser-Dampf-Kreislauf gespült wird und dabei unter anderem partikelförmige Verunreinigungen durch Abschlämmen des Dampferzeugers entfernt werden. Vorzugsweise erfolgt diese Maßnahme etwa aus verfahrensökomischen Gesichtspunkten im Anschluss an eine Unterbrechung der Dosierung des Filmbildners. Denkbar ist auch, dass zur Entfernung von Verunreinigungen aus dem Wasser-Dampf-Kreislauf Filter eingesetzt werden, etwa die Filteranlagen des kraftwerkseigenen Kondensat-Reinigungssystems.

Bei einer besonders bevorzugten Verfahrensvariante erfolgt die Ermittlung der Konzentration des Filmbildners und der Verunreinigung an mehreren über den Wasser-Dampf-Kreislauf verteilten Messpunkten, wodurch sich eine Aussage darüber treffen lässt, wie sich die Wirkung einer Maßnahme, etwa eine Reduzierung der Dosierrate des Filmbildners an unterschiedlichen Stellen des Wasser-Dampf-Kreislauf auswirkt. Außerdem wird die Genauigkeit der Verfahrenssteuerung bzw. -regelung erhöht. Zusätzlich zu den oben beschriebenen Maßnahmen zur Vermeidung der eingangs geschilderten nachteiligen Effekte wird bei einem erfindungsgemäßen Verfahren der Filmbildner so dosiert, dass sich in der Wasserphase des Wasser-Dampf-Kreislaufs, zumindest im Dampferzeuger-Speisewasser, eine Konzentration von 1 bis 2 ppm, vorzugsweise von 1 bis 1,5 ppm, ergibt. Es hat sich gezeigt, dass, wenn innerhalb dieser Grenzen, insbesondere maximal bis 1,5 ppm Filmbildner gearbeitet wird, die Ausbildung dicker Schichten des Filmbildners vermieden werden kann. Es hat sich gezeigt, dass in vielen Fällen bereits ein ausreichender Film auf den Oberflächen vorhanden ist, wenn die vorgenannte Konzentration bzw. Zielkonzentration erreicht ist.

Mit größerer Zuverlässigkeit wird jedoch auf den Oberflächen ein diese im Wesentlichen vollständig überdeckender einlagiger bzw. im Wesentlichen monomolekularer Film erhalten, wenn das Verfahren unter den oben erwähnten Prämissen so lange fortgesetzt wird, bis die Konzentration des Filmbildners - bei konstanter Dosierrate - an mehreren über den Wasser-Dampf-Kreislauf verteilten Messpunkten im zeitlichen Mittel gesehen an mehreren Messpunkten (M1, M2, M3) gleich bleibt, wenn sich also an den Messpunkten eine Gleichgewichtskonzentration einstellt. Die bereits weiter oben schon erwähnten Messpunkte sind hier und ganz allgemein so verteilt, dass wenigstens ein Messpunkt sich im Einphasengebiet und wenigstens ein Messpunkt sich im Zweiphasengebiet des Wasser-Dampf-Kreislauf befindet. Unter dem o.g. zeitlichen Mittel ist der Trendverlauf zu verstehen, der sich ergibt, wenn messtechnisch bedingte Schwankungsbreiten durch geeignete Verfahren der klassischen Fehlerrechnung eliminiert wurden.

Als besonders wirksam sowohl für die Reinigungswirkung als auch für die Filmbildung haben sich Monoamine mit einem 8 bis 22 Kohlenstoffatome umfassenden Kohlenwasserstoffrest heraus gestellt, wobei hier besonders Octadecylamin geeignet ist. Monoamine der vorliegenden Art liegen bei Raumtemperatur als wachsähnliche Substanz vor. Herkömmliche, daraus hergestellte Emulsionen enthalten üblicherweise relativ große Mengen an organischen Emulgatoren, welche im Wasser-Dampf-Kreislauf schädliche Auswirkungen haben können. Daher wird bei dem erfindungsgemäßen Verfahren das FFA vorzugsweise in Reinform eingesetzt, nämlich als wässrige Emulsion ohne Zusatz von Emulgatoren, die durch ein rein mechanisches Vermischen unter Anwendung von erhöhter Temperatur erhalten werden können.

Das Verfahren wird nun anhand eines Ausführungsbeispiels unter Bezugnahme auf die beigefügten Abbildungen näher erläutert. Es zeigen:
Fig. 1 in stark schematisierter Ansicht den Wasser-Dampfkreislauf eines Druckwasserreaktors,
Fig. 2 ein Diagramm, das den zeitlichen Verlauf der durch eine ODA-Dosierung hervorgerufene Konzentration von ODA im Dampferzeuger-Speisewasser wiedergibt,
Fig. 3 ein Flussdiagramm einer Konditionierung.

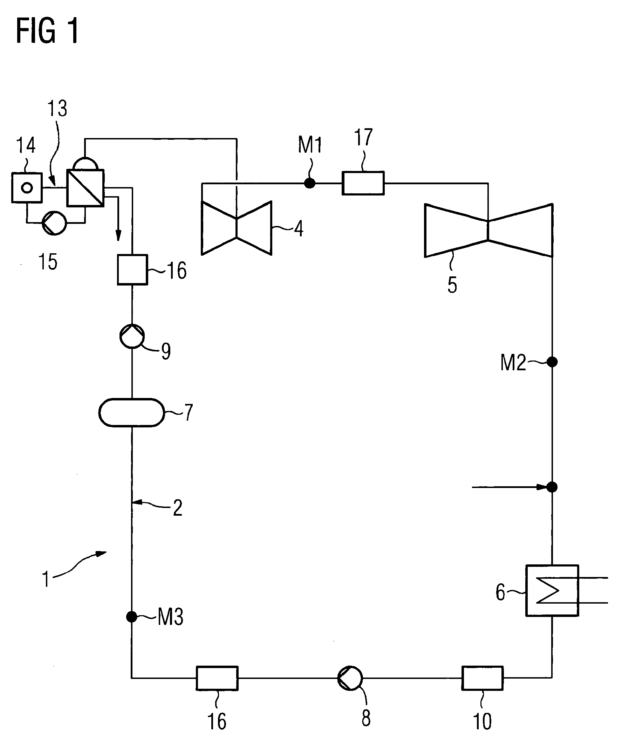

Der Wasser-Dampfkreislauf 1 (im Folgenden abgekürzt mit WDK) eines Druckwasserreaktors umfasst ein Rohrleitungssystem 2, mehrere Dampferzeuger 3, üblicherweise mehrere Turbinen, beispielswese eine Hochdruckturbine 4 und eine Niederdruckturbine 5, einen Wasserabscheider-Zwischenüberhitzer 17 zwischen HD und ND-Turbinen, einen Kondensator 6, einen Speisewasserbehälter 7, eine zwischen dem Kondensator 6 und dem Speisewasserbehälter 7 angeordnete Kondensatpumpe 8, mehrere Speisewasser-Vorwärmer 16 und eine zwischen dem Speisewasserbehälter 7 und dem Dampferzeuger angeordnete Speisewasserpumpe 9. Außerdem ist ein dem Kondensator 6 nachgeschaltetes Kondensat-Reinigungssystem 10 vorhanden, welches mechanische Filter und ebenso Ionentauscher umfassen kann. Der Dampferzeuger 3 ist primärseitig mit dem Primärkreislauf 13 des Kernreaktors verbunden, welcher den Reaktordruckbehälter 14 und eine Hauptkühlmittelpumpe 15 umfasst (Fig. 1).

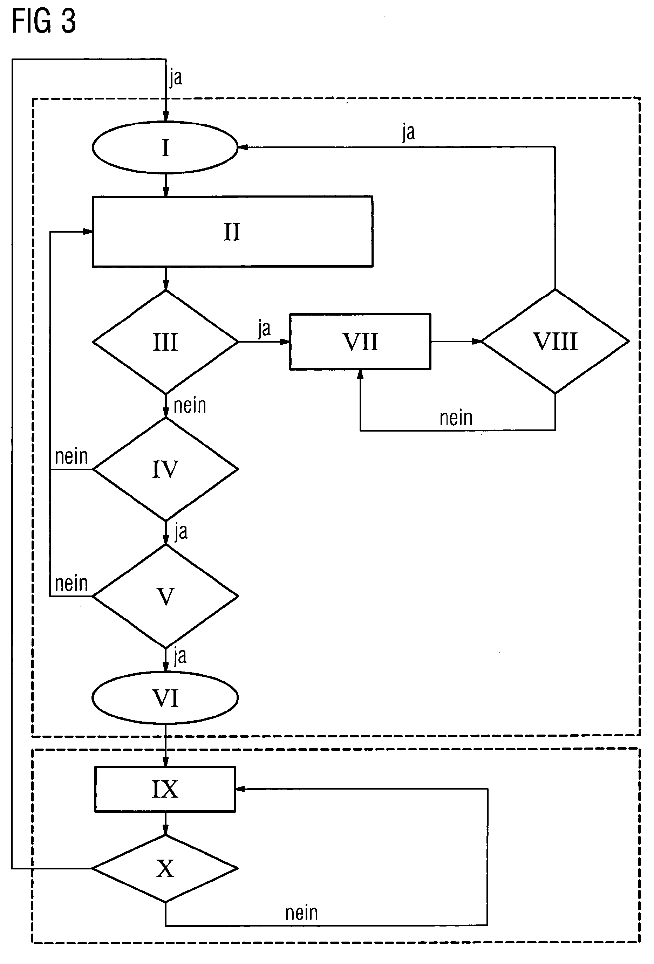

Das Reinigungs- und Konditionierungsverfahren wird, wie weiter oben bereits erwähnt, während des Leistungsbetriebs durchgeführt. Darunter sind auch Phasen während des Anfahrens und Abfahrens des Kraftwerks umfasst. Bei dem im Folgenden geschilderten Ausführungsbeispiel wird die Konditionierung des Wasser-Dampf-Kreislaufs bzw. die Dosierung eines Filmbildenden Amins, kurz vor dem Herunterfahren des Kernreaktors durchgeführt. In der Beschreibung wird exemplarisch auf ODA als Filmbildner Bezug genommen. Die von Beginn des Verfahrens an durchgeführte laufende Überwachung von Konzentrationen bzw. Konzentrationsänderungen von ODA und Verunreinigungen (siehe II in Fig. 3) erfolgt über mehreren an unterschiedlichen Positionen des WDK 1 angeordneten Messpunkten. Exemplarisch sind einige dieser Messpunkte M1, M2, M3 in Fig. 1 dargestellt.

Von Beginn der FFA-Dosierung an, ergibt sich aufgrund der tensidartigen Eigenschaften des ODA eine Mobilisierung von Verunreinigungen. Für die Konzentration dieser Verunreinigungen sind daher, wie weiter oben schon erwähnt, Grenzwerte gesetzt, die nicht überschritten werden dürfen. Die Messung der Konzentration erfolgt im Falle ionaler Verunreinigungen entweder unmittelbar, d.h. bezogen auf ein ganz bestimmtes Ion mit bekannten nasschemischen oder physikalisch-chemischen Messverfahren. Die Konzentrationsbestimmung kann aber auch mittelbar, d.h. über die durch die Mobilisierung bzw. das Übertreten von Ionen in das Arbeitsmedium hervorgerufene Erhöhung von dessen elektrischer Leitfähigkeit erfolgen. Die dabei angewendeten Messmethoden sind dem Fachmann allgemein bekannt, so dass darauf nicht eingegangen werden muss. Ein weiterer für eine kontrollierte Durchführung des Verfahrens wichtiger Parameter ist die FFA- bzw. ODA-Konzentration im Arbeitsmedium, dem im WDK vorhandenen Wasser.

Schließlich werden infolge der ODA-Dosierung auch Korrosionsprodukte freigesetzt, also feinste Partikel von Magnetit, welche an den Oberflächen haften und durch die Wirkung von ODA kolloidal in Lösung gehen. Da der überwiegende Teil an Korrosionsprodukten auf Metalloxide wie Magnetit zurückgeht, ist es im Normalfall ausreichend, wenn nur diesbezüglich Messungen durchgeführt werden. Dabei wird z.B. der Eisengehalt des Speisewassers auf bekannte Weise bestimmt. Schließlich wird noch der pH-Wert überwacht, um eine Korrosion der metallischen Bauteile des WDK 1 zu verhindern. Auch ist es denkbar, dass der TOC-Wert (Total Organic Carbon) überwacht wird, um eine eventuelle Zersetzung des zudosierten ODA bei den herrschenden Bedingungen, also Temperaturen über 250°, somit die Bildung von Zersetzungsprodukten, die korrosiv wirken können, auszuschließen.

Die ODA-Dosierung bzw. die pro Zeiteinheit in den WDK 1 dosierte ODA-Menge wird - anhand der an den Messpunkten M1 bis M3 ermittelten Messdaten so geregelt, dass die Konzentrationen der aufgrund der ODA-Dosierung ins Arbeitsmedium übergetretenen Verunreinigungen Art unterhalb vorgegebener Grenzwerte bleiben (siehe III in Fig. 3). Darüber hinaus kann durch die Kontrolle der oben genannten Konzentrationswerte schon frühzeitig ein Trend erkannt werden, so dass frühzeitig eine Gegenmaßnahme eingeleitet, z.B. die ODA-Dosierung reduziert oder unterbrochen werden kann. Dabei ist zu berücksichtigen, dass sich eine Dosierungsänderung aufgrund des Wasservolumens und der Rohrleitungslänge des WDK 1 erst einige Stunden später auswirkt. Diese zeitliche Verzögerung spielt aber bei einem erfindungsgemäßen Verfahren praktisch keine Rolle, da aufgrund der permanenten ganzheitlichen Überwachung an mehreren Messpunkten M1 bis M3 eine Änderung eines kritischen Konzentrationswerts erkannt wird, noch lange bevor dieser seine kritische Grenze erreicht hat.

Um einen Anhaltspunkt zu haben, welche ODA-Mengen für einen gegebenen WDK 1 erforderlich ist, ist es zweckmäßig abzuschätzen, welche ungefähre Menge an ODA erforderlich ist, um einen monomolekularen hydrophoben Film auf den Oberflächen des WDK zu erzeugen. Diese Menge kann noch mit einem Faktor multipliziert werden, um die bei submikroskopischer Betrachtung doch erhebliche Rauhigkeit der Oberflächen sowie ODA verbrauchende Effekte, beispielsweise den Verschmutzungsgrad des WDK, zu berücksichtigen. Anhand dieser Abschätzung lässt sich bei vorgegebener ODA-Dosierrate ein definierter Zeitraum dafür angeben, in welchem ein die Oberflächen vollständig überziehender z.B. monomolekularer ODA-Film entstanden ist.

Bei Erreichen einer kritischen Konzentration einer Verunreinigung (III in Fig. 3) besteht eine wirksame Maßnahme zur Reduzierung der kritischen Konzentration in einer Unterbrechung der FFA-Dosierung und einer nachfolgenden Spülung bzw. Abschlämmung der Dampferzeuger, bei der die Verunreinigung aus dem WDK ausgeschleust wird (VII in Fig. 3). Dabei wird laufend überwacht, ob die anlagenspezifischen Kontrollparameter bzw. Konzentrationen in einem zulässigen Bereich liegen (VIII in Fig. 3). Wenn dies der Fall ist, wird die Konditionierung durch Wiederaufnahme der FFA-Dosierung fortgesetzt.

Die Konzentration an ODA in der wässrigen Phase wird durch entsprechende Dosierraten so geregelt, dass dieser Wert praktisch bis zum Schluss des Verfahrens eine obere absolute Sicherheitsgrenze von 2 ppm, vorzugsweise 1,5 ppm nicht überschreitet. Dadurch wird verhindert, dass eine zu starke, über die gesetzten Grenzwerte hinaus gehende Mobilisierung von Verunreinigungen oder eine nicht mehr kontrollierbare massive ODA-Abscheidung auftritt. Auch ist sichergestellt, dass sich keine unerwünschten massiven ODA-Ablagerungen bilden. Dabei wird so dosiert, dass sich zunächst eine niedrige ODA-Konzentration ergibt, die erst gegen Ende des Verfahrens auf eine Zielkonzentration von oberhalb 1 ppm, maximal bis 1,5 ppm oder 2 ppm (C_{Target} in Fig. 1) ansteigt. Vorzugsweise wird solange zudosiert, bis die ODA-Konzentration mit steigender Tendenz die maximalen Werte von 2 ppm bzw. 1,5 ppm erreicht hat. (VI in Fig. 3). Zur Bestimmung der Zielkonzentration reicht die Messung an einem Messpunkt aus, wobei vorzugsweise die Zielkonzentration im Dampferzeuger-Speisewasser (Messpunkt M1) gemessen wird.

Das erreichen in vorstehenden Absatz genannten Zielkonzentrationen könnte bereits ein Abbruchkriterium für die Dosierung des Filmbildners bzw. ODA, d.h. ein Anzeichen dafür sein, dass sich auf den Oberflächen des Wasser-Dampf-Kreislaufs ein diese vollständig bedeckender Film ausgebildet hat.

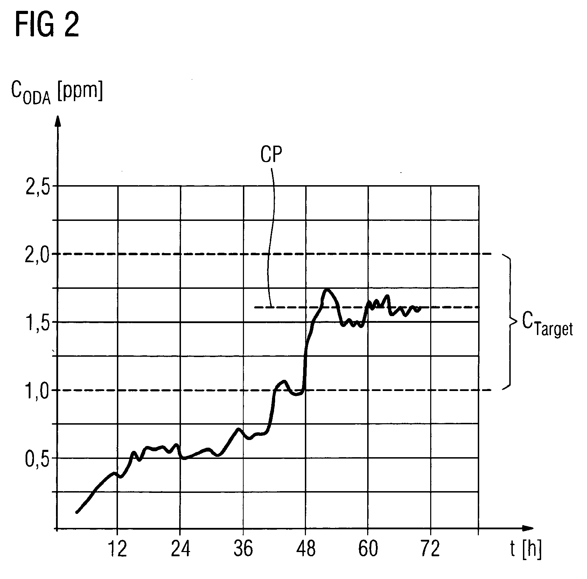

Vorzugsweise wird zusätzlich zu dem im vorgehenden Absatz gekannten Kriterium der Verlauf der ODA-Konzentration bei gleichbleibender ODA-Dosierrate beobachtet. Wenn die Gleichgewichts-Konzentration des ODA an mehreren Messpunkten, vorzugsweise an allen Messpunkten, im Beispiel M1 bis M3, erreicht ist, wenn also eine gleichbleibende oder geringfügig fallende ODA-Konzentration zu beobachten ist (V in Fig. 3), ist der Zeitpunkt erreicht, die ODA-Dosierung bzw. das Konditionierungsverfahren zu beenden (VI in Fig. 3, Linie CP in Fig. 2). Die gleichbleibende ODA-Konzentration gegen Ende der Filmbildung könnte darauf zurückzuführen sein, dass die Bildung von ODA-Doppel-und Mehrfachschichten kinetisch und/oder thermodynamisch begünstigt ist und daher schneller von sich geht als die anfängliche Filmbildung auf den metallischen Oberflächen des WDK 1.

Der auf die Oberflächen des WDK aufgebrachte ODA-Film kann mit der Zeit seine Wirksamkeit verlieren oder verringern, indem er sich beispielsweise teilweise von Oberflächen ablöst oder etwa thermischen oder chemischen Abbauprozessen unterliegt. Es ist daher zweckmäßig, zu gegebener Zeit eine Auffrischungskonditionierung vorzunehmen. Hierzu ist eine permanente Überwachung des Arbeitsmediums auf die Anwesenheit von Korrosionprodukten, also mit der Bildung von Oxidationsschichten in Zusammenhang stehenden Produkten, beispielsweise von aus den Bauteilmaterialien des WDK stammenden Metallionen, zweckmäßig. Sobald ein - signifikanter - Anstieg von Korrosionsprodukten erkennbar wird (X in Fig. 3), wird eine Konditionierung der oben beschriebenen Art in Gang gesetzt.

Legende zum Flussdiagramm gem. Fig. 3:
- I: Start FFA-Konditionierung
- II: Prozess-Überwachung
- FFA-Konzentration (M1-M3 in Fig. 1)
- Kontrollparameter gemäß Anlagenspezifikation
- III: Grenzwerte Kontrollparameter erreicht?
- IV: Zielkonzentration FFA in M1 erreicht?
- V: Gleichgewichtskonzentration FFA über M1-M3 erreicht?
- VI: Ende FFA-Konditionierung
- VII: Dosierung unterbrechen, Spülen
- VIII: Werte der Kontrollparameter in zulässigem Bereich?
- IX: Prozess-Überwachung von Korrosionsprodukten
- X: Steigt die Konzentration von Korrosionsprodukten an?

## Patentansprüche

1. Verfahren zur Reinigung und Konditionierung des Wasser-Dampf-Kreislaufs eines Kraftwerks, insbesondere eines Kernkraftwerks, bei dem
- während des Leistungsbetriebs dem im Wasser-Dampf-Kreislauf zirkulierenden Arbeitsmedium ein Amin als Filmbildner zudosiert wird, das auf den Oberflächen des Kreislaufs einen hydrophoben Film bildet, wobei
- während der Dauer des Verfahrens die Konzentration des Filmbildners zumindest im Dampferzeuger-Speisewasser durch Messungen überwacht wird,
**dadurch gekennzeichnet, dass**
- während der Dauer des Verfahrens die Konzentration von wenigstens einer im Arbeitsmedium enthaltenen Verunreinigung zumindest im Dampferzeuger-Speisewasser durch Messungen überwacht wird,
- dass die Konzentration des Filmbildners in Abhängigkeit von der Konzentration der wenigstens einen Verunreinigung dadurch verändert wird, dass bei einer Zunahme der Konzentration der wenigstens einen Verunreinigung die Dosierrate des Filmbildners verringert wird.

2. Verfahren nach Anspruch 1, **dadurch gekennzeichnet, dass** die Ermittlung der Konzentration des Filmbildners und der Verunreinigung an mehreren über den Wasser-Dampf-Kreislauf verteilten Messpunkten (M1, M2, M3) erfolgt.

3. Verfahren nach einem der Ansprüche 1 oder 2, **dadurch gekennzeichnet, dass** die Dosierung des Filmbildners unterbrochen wird, wenn sich die Konzentration der wenigstens einen Verunreinigung einem Grenzwert annähert.

4. Verfahren nach einem der vorhergehenden Ansprüche, **dadurch gekennzeichnet, dass** der Wasser-Dampf-Kreislauf gespült wird.

5. Verfahren nach Anspruch 4, **dadurch gekennzeichnet, dass** die Spülung im Anschluss an die Unterbrechung der Dosierung des Filmbildners erfolgt.

6. Verfahren nach einem der vorhergehenden Ansprüche, **dadurch gekennzeichnet, dass** der Filmbildner mit einer solchen Rate dosiert wird, dass seine Konzentration in der flüssigen Phase des Arbeitsmediums eine Konzentration von 2 ppm nicht überschreitet.

7. Verfahren nach Anspruch 6, **gekennzeichnet durch** eine maximale Konzentration an Filmbildner von maximal 1,5 ppm.

8. Verfahren nach Anspruch 6 oder 7, **dadurch gekennzeichnet, dass** die Dosierung des Filmbildners beendet wird, wenn dessen Konzentration einen Wert von 1 ppm bis 2 ppm oder 1 bis 1,5 ppm erreicht hat.

9. Verfahren nach einem der Ansprüche 6 bis 8, **dadurch gekennzeichnet, dass** die Dosierung des Filmbildners bereits vor Erreichen des vorgenannten Wertes der Konzentration des Filmbildners im Arbeitsmedium beendet wird, wenn dessen Konzentration bei konstanter Dosierrate - im zeitlichen Mittel gesehen - an mehreren Messpunkten (M1, M2, M3) gleich bleibt.

10. Verfahren nach Anspruch 9, **dadurch gekennzeichnet, dass** eine gleichbleibende Konzentration an Filmbildner an mehreren über den Wasser-Dampf-Kreislauf verteilten Stellen gemessen wird.

11. Verfahren nach einem der vorhergehenden Ansprüche, **gekennzeichnet durch** wenigstens ein Messpunkt (M1) im Zweiphasengebiet und wenigstens ein Messpunkt im Einphasengebiet des Wasser-Dampf-Kreislaufs.

12. Verfahren nach einem der vorhergehenden Ansprüche, **dadurch gekennzeichnet, dass** als Filmbildner ein Monoamin mit einem 8 bis 22 Kohlenstoffatome umfassenden Kohlenwasserstoffrest verwendet wird.

13. Verfahren nach Anspruch 12, **gekennzeichnet durch** die Verwendung von Octadecylamin.

## Claims

1. Method for cleaning and conditioning the water-steam circuit of a power station, in particular a nuclear power station, in which
- during the power operation, an amine is metered into the work medium circulating in the water-steam circuit as a film former, which forms a hydrophobic film on the surfaces of the circuit, wherein
- throughout the duration of the process, the concentration of the film former is monitored at least in the steam generator feed water by measuring,
**characterised in that**
- throughout the duration of the process, the concentration of at least one impurity contained in the work medium is monitored at least in the steam generator feed water by measuring,
- that the concentration of the film former is changed depending on the concentration of the at least one impurity by the dose rate of the film former being reduced in the case of an increase of the concentration of the at least one impurity.

2. Method according to claim 1, **characterised in that** the determination of the concentration of the film former and of the impurity occurs at several measuring points (M1, M2, M3) distributed over the water-steam circuit.

3. Method according to one of claims 1 or 2, **characterised in that** the dosage of the film former is interrupted if the concentration of the at least one impurity approaches a limit value.

4. Method according to one of the preceding claims, **characterised in that** the water-steam circuit is rinsed.

5. Method according to claim 4, **characterised in that** the rinsing occurs in connection with the interruption of the dosage of the film former.

6. Method according to one of the preceding claims, **characterised in that** the film former is metered at such a rate that its concentration in the liquid phase of the work medium does not exceed a concentration of 2ppm.

7. Method according to claim 6, **characterised by** a maximum concentration of film former of a maximum of 1.5ppm.

8. Method according to claim 6 or 7, **characterised in that** the dosage of the film former is ended if the concentration thereof has reached a value of 1ppm to 2ppm or 1 to 1.5ppm.

9. Method according to one of claims 6 to 8, **characterised in that** the dosage of the film former is ended before reaching the aforementioned value of the concentration of the film former in the work medium if the concentration thereof remains the same at a constant dose rate - seen over an average time-at several measuring points (M1, M2, M3).

10. Method according to claim 9, **characterised in that** a concentration of film former which remains the same is measured at several points which are distributed over the water-steam circuit.

11. Method according to one of the preceding claims, **characterised by** at least one measuring point (M1) in the two phase area and at least one measuring point in the single phase area of the water-steam circuit.

12. Method according to one of the preceding claims, **characterised in that** a monoamine having a hydrocarbon radial comprising 8 to 22 carbon atoms is used as a film former.

13. Method according to claim 12, **characterised by** the use of octadecylamine.

## Revendications

1. Procédé de nettoyage et de conditionnement du circuit de vapeur-eau d'une centrale thermique, en particulier d'une centrale nucléaire, dans lequel
- en cours d'exploitation, on ajoute de façon dosée au fluide de travail circulant dans le circuit de vapeur-eau une amine comme agent filmogène, qui forme un film hydrophobe sur les surfaces du circuit,
- dans lequel, pendant la durée du procédé, on surveille la concentration de l'agent filmogène dans l'eau d'alimentation du générateur de vapeur par des mesures,
**caractérisé en ce que**
- pendant la durée du procédé, on surveille la concentration d'au moins une impureté contenue dans le fluide de travail au moins dans l'eau d'alimentation du générateur de vapeur, par des mesures,
- on modifie la concentration de l'agent filmogène en fonction de la concentration de ladite au moins une impureté, on réduit le débit d'ajout de l'agent filmogène lors d'une augmentation de la concentration de ladite au moins une impureté.

2. Procédé selon la revendication 1, **caractérisé en ce que** l'on opère la détermination de la concentration de l'agent filmogène et de l'impureté en plusieurs points de mesure (M1, M2, M3) répartis sur le circuit de vapeur-eau.

3. Procédé selon l'une des revendications 1 ou 2, **caractérisé en ce que** l'on interrompt le dosage de l'agent filmogène, lorsque la concentration de ladite au moins une impureté s'approche d'une valeur limite.

4. Procédé selon l'une quelconque des revendications précédentes, **caractérisé en ce que** l'on rince le circuit de vapeur-eau.

5. Procédé selon la revendication 4, **caractérisé en ce que** l'on effectue le rinçage à la suite de l'interruption du dosage de l'agent filmogène.

6. Procédé selon l'une quelconque des revendications précédentes, **caractérisé en ce que** l'on dose l'agent filmogène avec un débit tel que sa concentration dans la phase liquide du fluide de travail ne dépasse pas une concentration de 2 ppm.

7. Procédé selon la revendication 6, **caractérisé par** une concentration maximale en agent filmogène de 1,5 pm au maximum.

8. Procédé selon la revendication 6 ou 7, **caractérisé en ce que** l'on cesse le dosage de l'agent filmogène, lorsque sa concentration a atteint une valeur de 1 ppm à 2 ppm ou de 1 à 1,5 ppm.

9. Procédé selon l'une quelconque des revendications 6 à 8, **caractérisé en ce que** l'on cesse le dosage de l'agent filmogène déjà avant d'atteindre la valeur précitée de la concentration de l'agent filmogène dans le fluide de travail, lorsque sa concentration, avec un débit de dosage constant-considéré en moyenne temporelle - reste identique à plusieurs points de mesure (M1, M2, M3).

10. Procédé selon la revendication 9, **caractérisé en ce que** l'on mesure une concentration constante en agent filmogène en plusieurs points répartis sur le circuit de vapeur-eau.

11. Procédé selon l'une quelconque des revendications précédentes, **caractérisé par** au moins un point de mesure (M1) dans la zone à deux phases et au moins un point de mesure dans la zone à une phase du circuit de vapeur-eau.

12. Procédé selon l'une quelconque des revendications précédentes, **caractérisé en ce que** l'on utilise comme agent filmogène une monoamine avec un radical hydrocarboné comprenant 8 à 22 atomes de carbone.

13. Procédé selon la revendication 12, **caractérisé par** l'utilisation de l'octadécylamine.
